# EUROPÄISCHE PATENTSCHRIFT

(11) **EP 0 856 696 B1**
(45) Veröffentlichungstag und Bekanntmachung des Hinweises auf die Patenterteilung: **02.01.2004**
(21) Anmeldenummer: 98101422.8
(22) Anmeldetag: 28.01.1998
(51) Int. Cl.: F16L 23/036, F16L 25/00, F16L 47/00, F16L 33/28

(54) **Schlauchanschluss für Ladeluftkühler**
Hose connection to an intercooler apparatus
Connexion d'un tuyau souple sur un appareil de refroidissement intermédiaire

(30) Priorität: 29.01.1997 DE 19703185
(43) Veröffentlichungstag der Anmeldung: 05.08.1998
(73) Patentinhaber: ContiTech Schlauch GmbH, 30165 Hannover (DE)
(72) Erfinder: Becker, Eckhard, 34399 Oberweser (DE)

(56) Entgegenhaltungen:
- DE-A- 3 444 930
- DE-U- 8 712 325
- FR-A- 1 140 927
- US-A- 3 189 676
- US-A- 5 074 598

## Beschreibung

Gegenstand der Erfindung ist ein Schlauchanschluß für Ladeluftkühler gemäß dem Oberbegriff des Patentanspruchs 1. In den Unteransprüchen sind vorteilhafte Ausführungsformen und Weiterbildungen der Erfindung angegeben.

Die in Schlauchanschlüssen der erfindungsgemäßen Art verwendeten Ladeluftschläuche werden zur Förderung der Ladeluft für Kraftfahrzeug-Verbrennungsmotoren als elastische Verbindung zwischen dem Motor und dem Ladeluftkühler verwendet. Dabei ist es wegen der dort auftretenden Erschütterungen, Temperaturunterschiede und stark schwankenden, hohen Druckbelastungen schwierig, einen festen und dichten Sitz der Enden der Schläuche an dem jeweiligen Schlauchstutzen zu erzielen.

Zur Befestigung derartiger Schläuche an den entsprechenden Schlauchstutzen sind verschiedene Methoden bekannt:

Gebräuchlich sind zylindrische oder leicht gewellte Schlauchstutzen, auf denen ein darauf aufgestecktes Schlauchende mittels einer Schlauchschelle fixierbar ist. Solche Befestigungen halten nur geringen statischen und dynamischen Verlagerungen (Parallelversatz, Winkelabweichung) und/oder Längenänderungen (Zugdeformation) stand, ohne undicht zu werden.

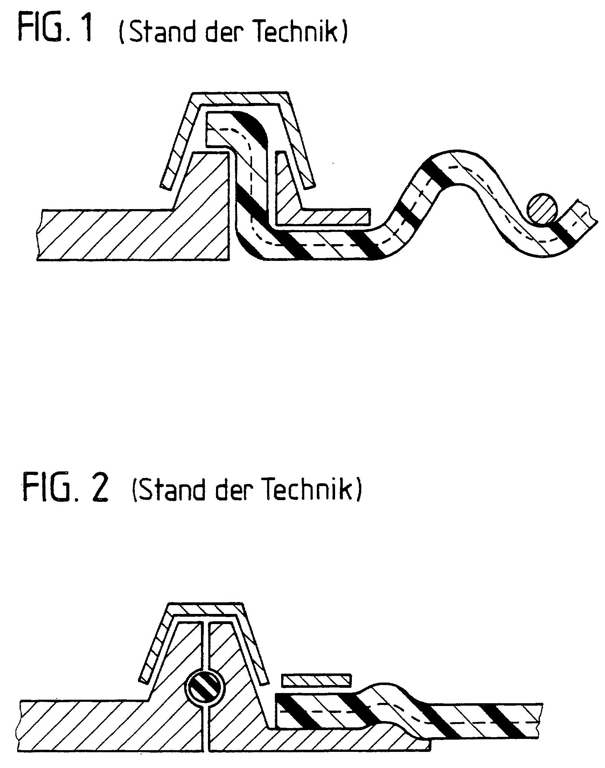

Um diesen Nachteil zu überwinden, sind verschiedene Befestigungen unter Verwendung sogenannter V-Schellen vorgeschlagen worden. Beispielsweise ist in der Praxis ein gattungsgemäßer Schlauchanschluß bekannt geworden (siehe Figur 1), bei dem das Ende des zu verbindenden Schlauches über einen Schlauchstutzen gestülpt wurde, nachdem zuvor eine Winkelhülse über das Schlauchende gesteckt worden war. Schließlich drückte eine einerseits das radiale Ende des Schlauchstutzens und andererseits die Winkelhülse umgreifende V-Schelle das mit dem Stutzen zu verbindende Schlauchende gegen die Stirnfläche des Stutzens, wodurch sich eine dichte Verbindung erzielen ließ. Da beim Zusammenbau mehrere Teile präzise zueinander zu justieren waren, konnte es vorkommen, daß das Schlauchende verrutschte und die V-Schelle keine dichte Verbindung erzeugte. Auch konnte es passieren, daß das Schlauchende völlig aus der Befestigung herausrutschte, wenn die V-Schelle nicht fest genug angezogen wurde.

Bei einer weiteren bekannten Schlauchbefestigung (siehe Figur 2) diente ein mit einer radialen Stirnfläche versehenes Metallformteil als Gegenstück zum stirnseitigen Ende eines Schlauchstutzens. Das Metallformteil und der Schlauchstutzen wurden wie im vorigen Beispiel mit einer V-Schelle zusammengehalten, wobei die Dichtheit zwischen Stutzen und Metallformteil durch einen zwischengelegten elastischen O-Ring gewährleistet werden sollte. Die eigentliche Befestigung des Schlauches erfolgte an dem zylindrisch oder gewellt ausgebildeten anderen Ende des Metallformteiles, wobei das Schlauchende auf das freie Ende des Metallformteiles gestülpt und - z.B. vergleichbar EP 0 312 756 - mit einer ringförmigen Schelle verpreßt wurde. In Anbetracht der diversen

Befestigungsteile war dieser Schlauchanschluss in der Herstellung zeit- und kostenaufwendig und konnte wegen seiner Störanfälligkeit nicht immer befriedigen.

*Dies gilt insbesondere auch für einen aus der US-A 3 189 676 bekannten Schlauchanschluss, bei dem das freie Ende des Schlauches als radiale flanschartige Verdickung geformt ist, deren axiale Stirnfläche radial und deren axiale Rückfläche konisch ausgebildet ist und in die ein von Verstärkungseinlagen des Schlauches umschlungener Stützring eingebettet ist. Zur Fixierung dienen ein entsprechend konischer Pressring und an diesem angreifende Schraubbolzen*

Der vorliegenden Erfindung liegt die Aufgabe zugrunde,
*ausgehend von dem vorstehend beschrieben Stand der Technik* einen einfachen und zuverlässig dichtenden Schlauchanschluss für einen Ladeluftkühler mit einem eine radiale Stirnfläche aufweisenden Schlauchstutzen unter Verwendung einer V-Schelle zu schaffen.

Gelöst wird diese Aufgabe durch
*einen Schlauchanschluss, der aus der US-A-3 189 676 bekannten Gattung, der die kennzeichnenden Merkmale des Patentanspruchs 1 aufweist und der dadurch* eine sichere formschlüssige Verbindung zwischen dem Schlauchstutzen und dem Ladeluftschlauch erzielt.

Das Einlegen eines Stützringes in die flanschartige Verdickung des Schlauches ist notwendig, um bei den verschiedenen - insbesondere dynamischen - Betriebszuständen einen sicheren Sitz des Anschlusses zu gewährleisten. Durch das bei der Herstellung des Schlauches um den Stützring geschlungene Ende der in den Schlauch eingebetteten, vorzugsweise textilen Verstärkungseinlagen und die bei der Vulkanisation erfolgende Formgebung der flanschartigen Verdickung des Schlauchendes mit radialer Stirnfläche und konischer zur V-Schelle korrespondierender Rückseite ergibt sich mit der axialen Presswirkung der V-Schelle ein dichtes formschlüssiges System.

Im Vergleich zu herkömmlichen gattungsgemässen Schlauchanschlüssen ist ein geringerer Platzbedarf zu verzeichnen, der Materialaufwand ist geringer, und die Montage ist vereinfacht, da außer der V-Schelle keine weiteren Einzelteile erforderlich sind.

Vorzugsweise ist das erfindungsgemäße flanschartig verdickte Schlauchende durch zusätzlich eingebrachtes Elastomer im Flanschbereich verstärkt. Auf diese Weise erhält die Verdickung das notwendige Volumen für einen sicheren Formschluß der V-Schelle, wodurch der Schlauchanschluß auch hohen Betriebsdrücken und dynamischen Belastungen standhält und seine insgesamt zu erwartende Lebensdauer erhöht wird.

Der Schlauch ist zweckmäßig als Wellschlauch ausgebildet; so können Längenabweichungen und Relativbewegung der an ihn angeschlossenen Aggregate durch Zugdeformation besser ausgeglichen werden. Der in die flanschartige Vedickung des Schlauchendes eingebettete Stützring besteht vorzugsweise aus Metall. Er kann jedoch vorteilhaft auch aus mehreren Windungen eines Kunststoffadens gebildet sein, die bei der Vulkanisation des Schlauches zu einem Ring verschmolzen oder oberflächlich miteinander verschweißt sind.

Zur weiteren Erhöhung der Druckfestigkeit des Schlauches kann die aus einem hitzebeständigen Elastomer und in dieses eingebetteten - vorzugsweise textilen - Verstärkungseinlagen gebildete Schlauchwandung an ihrer Außenseite mit äquidistant angeordneten äußeren Stützringen umfaßt sein. Vorzugsweise gleicht der in die flanschartige Verdickung des Schlauchendes eingebettete Stützring diesen äußeren Stützringen sowohl in den Abmessungen als auch bezüglich des Werkstoffs.

Um eine feste Verklammerung durch die V-Schelle sicherzustellen, werden die Abmessungen des in die flanschartige Verdickung des Schlauchendes eingebetteten Stützringes - zweckmäßig übereinstimmend mit demjenigen der äußeren Stützringe - vorzugsweise so gewählt, daß sein Innenradius gleich der Summe aus dem Innenradius des Schlauches bzw. des verdickten Schlauchendes und der Wandstärke des Schlauches ist.

Für Einsatzfälle, in denen ein gattungsgemäßer Schlauchanschluß extremen Beanspruchungen durch hohe Innendrucke und/oder hohe Zugkräfte in Axialrichtung ausgesetzt ist, wird erfindungsgemäß vorgeschlagen, an die Stirnfläche der flanschartigen Verdickung des Schlauchendes einen ringartig umlaufenden axialen Vorsprung anzuformen, der mit einer ihm axial gegenüberliegenden, in die Stirnfläche des Schlauchstutzens eingeformten, umlaufenden axialen Ausnehmung gleichen axialen Längsschnittes zusammenwirkt, indem er formschlüssig in diese eingreift.

Durch diese Ausbildung des Schlauchendes und des mit diesem zusammenwirkenden Schlauchstutzens wird zwischen diesen durch die V-Schelle nur an ihren Stirnflächen zusammengehaltenen Bauteilen eine sichere radiale Verrastung geschaffen, die unter allen praktisch vorkommenden Umständen verhindert, daß das flanschartig verdickte Anschlußende des Schlauches aus der Verklammerung der V-Schelle herausgezogen werden kann.

Der nach Art einer Rastnase wirkende umlaufende axiale Vorsprung und die diesen formschlüssig aufnehmende axiale Ausnehmung sind im axialen Längsschnitt vorzugsweise annähernd halbkreisförmig ausgebildet. Alternativ kommt insbesondere eine etwas trapezförmige Längsschnittkontur in Betracht.

Um die beabsichtigte Wirkung der vorstehend beschriebenen Verrastung zu optimieren, sind deren Elemente vorzugsweise im selben radialen Abstand von der Längsachse des Schlauchanschlusses angeordnet, wie der in die flanschartige Verdickung des Schlauchendes eingebettete Stützring; denn dann stützt dieser auch den axialen Rastvorsprung der Stirnfläche des Schlauches ab und verhindert, daß der Rastvorsprung sich aus der ihm zugeordneten Ausnehmung in der Stirnfläche des Schlauchstutzens herausbewegen kann.

Die verwendete V-Schelle ist zweckmäßig so dimensioniert, daß ihre Schenkel die konischen Rückflächen des Schlauchstutzens und der flanschartigen Verdickung des Schlauchendes vollflächig abstützen, indem die Schenkel der V-Schelle sich radial bis zu einem Innenradius erstrecken, der annähernd gleich dem Innenradius des eingebetteten Stützringes ist.

Um das hitzebeständige Elastomer der Schlauchwandung - vorzugsweise ein Silikon-Elastomer (VMQ) - vor Zersetzungen durch in der geförderten Ladeluft enthaltene Substanzen - insbesondere verschiedene Kohlenwasserstoffe - zu schützen, weist der verwendete Ladeluftschlauch eine als Sperrschicht wirksame Innenseele auf, die vorzugsweise so ausgebildet ist, daß sie auch die gesamte flanschartige Verdickung des Schlauchendes umfaßt, indem sie deren Stirn-, Außen- und Rückfläche überdeckt und somit auch die durch die V-Schelle bedeckten Bereiche schützt. Als Werkstoff für die Innenseele haben sich insbesondere Fluor-Elastomere (FPM) bewährt.

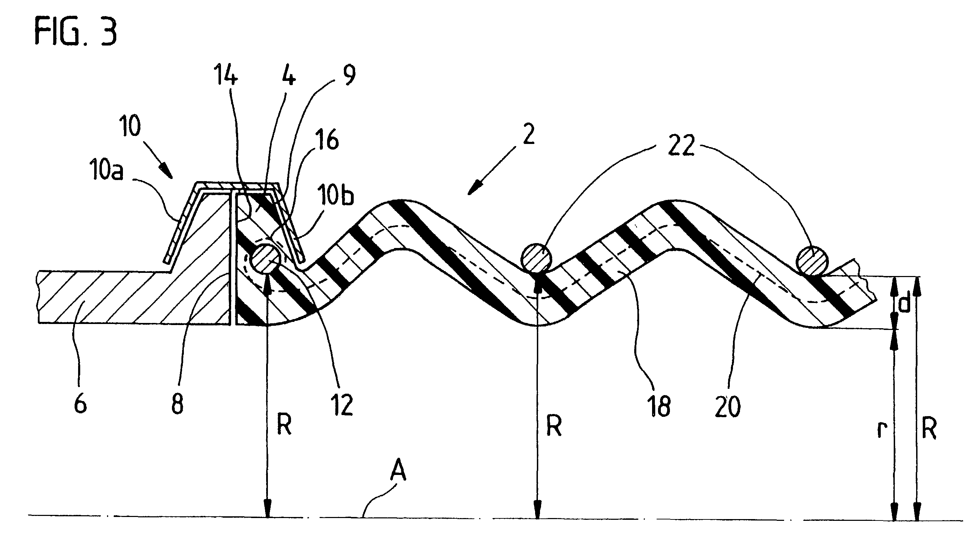

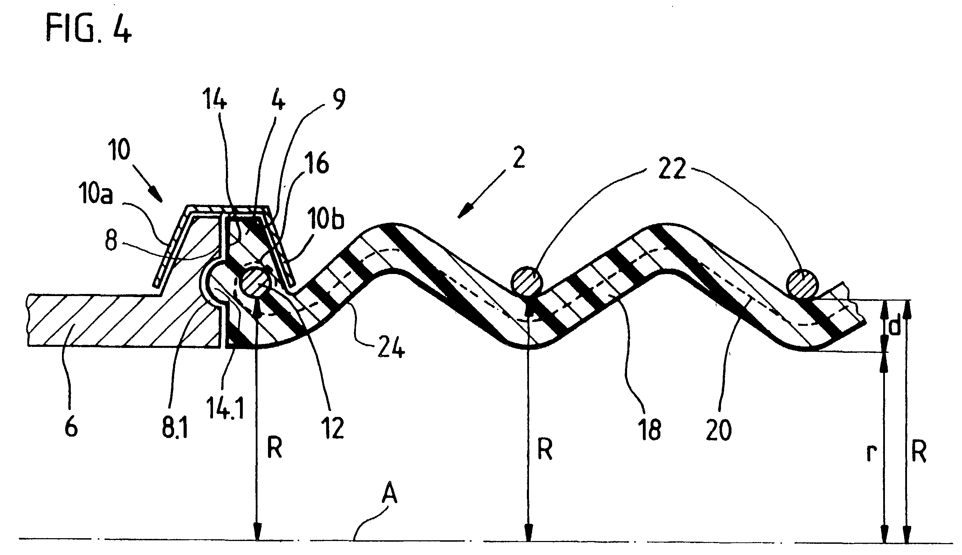

Zur Vedeutlichung des Aufbaues des erfindungsgemäßen Schlauchanschlusses wird auf die in Figur 3 und Figur 4 der beigefügten Zeichnung dargestellten Ausführungsbeispiele verwiesen.

Der in Figur 3 dargestellte Schlauchanschluß weist einen aus einem hitzebeständigen Elastomer 18 gebildeten und Verstärkungseinlagen 20 enthaltenden Schlauch 2 auf, dessen Anschlußende als flanschartige Verdickung 4 ausgebildet ist und einen von einem Umbug 16 der Verstärkungseinlagen 20 umschlungenen Stützring 12 enthält. Die gleichzeitig mit der Vulkanisation des Schlauches 2 geformte flanschartige Verdickung 4 besitzt eine radiale Stirnfläche 14 und - entsprechend der Neigung der Schenkel 10a und 10b der V-Schelle 10 - eine konische Rückfläche 9.

Diesem Anschlußende des Schlauches 2 steht ein in der Regel metallischer Schlauchstutzen 6 mit radialer Stirnfläche 8 gegenüber und auch dessen Rückfläche ist in entsprechender Weise konisch ausgebildet. Zur Montage des erfindungsgemäßen Schlauchanschlusses müssen lediglich die Stirnflächen 8 und 14 des Schlauchstutzens 6 und des Schlauches 2 zusammengefügt und dann die V-Schelle 10 herumgelegt und festgezogen werden.

In dem dargestellten Ausführungsbeispiel der Erfindung ist der Schlauch 2 als Wellschlauch ausgebildet, dessen Wandung aus einem mit Elastomer 18 und in dieses eingebetteten textilen Verstärkungseinlagen gebildet ist. Zur Erhöhung der Druckfestigkeit weist dieser Schlauch 2 äußere Stützringe 22 auf, die ihn äquidistant in seinen Wellentälern umfassen.

Figur 4 verdeutlicht die im vorstehenden beschriebene bevorzugte Ausführungsform der Erfindung, bei der durch formschlüssige Verrastung der Stirnflächen des Schlauchstutzens und des flanschartig verdickten Schlauchendes eine extreme Belastbarkeit des Schlauchanschlusses erzielt wird: Bei dem im übrigen analog zu Figur 3 aufgebauten Schlauchanschluß ist an die Stirnfläche 14 der flanschartigen Verdickung 4 ein ringartig umlaufender axialer Vorsprung 14.1 angeformt, der mit einer ihm axial gegenüberliegenden, in die Stirnfläche 8 des Schlauchstutzens 6 eingeformten, umlaufenden axialien Ausnehmung 8.1 gleichen axialen Längsschnitts zusammenwirkt, in dem er formschlüssig in diese eingreift. Der axiale Längsschnitt der Rastelemente 14.1 und 8.1 ist in der dargestellten bevorzugten Ausführungsform halbkreisförmig ausgebildet, kann jedoch auch trapezförmig sein.

Zur sicheren Fixierung des Schlauchanschlusses umfaßt die V-Schelle 10 mit ihren Schenkeln 10.1 und 10.2 die konischen Rückflächen des Schlauchstutzens 6 einerseits und der flanschartigen Verdickung 4 des Schlauchendes andererseits vorzugsweise soweit, daß der Innenradius der Schenkel annähernd gleich dem Innenradius R des Stützringes 12 ist.

## Patentansprüche

1. Schlauchanschluss für Ladeluftkühler mit einem mit dem Ladeluftkühler verbundenen, eine radiale Stirnfläche (8) und eine konische Rückfläche aufweisenden Schlauchstutzen (6) und mit einem eine aus hitzebeständigen Elastomeren (18) und Verstärkungseinlagen (20) gebildete Wandung aufweisenden Schlauch (2) und mit einer V-Schelle (10), mittels derer ein freies Ende des Schlauches (2) mit dem Schlauchstutzen (6) verbindbar ist, wobei das freie Ende des Schlauches (2) als radiale flanschartige Verdickung (4) geformt ist, deren axiale Stirnfläche (14) radial und deren axiale Rückfläche (9) konisch ausgebildet ist und in die ein von einem Umbug (16) der Verstärkungseinlagen (20) umschlungener Stützring (12) eingebettet ist,
**dadurch gekennzeichnet,**
**dass** an die Stirnfläche (14) der flanschartigen Verdickung (4) ein ringartig umlaufender axialer Vorsprung (14.1) angeformt ist, der mit einer ihm axial gegenüberliegenden, in die Stirnfläche (8) des Schlauchstutzens (6) eingeformten, umlaufenden axialen Ausnehmung (8.1) gleichen Längsschnitts zusammenwirkt, indem er formschlüssig in diese eingreift.

2. Schlauchanschluss nach Anspruch 1, **dadurch gekennzeichnet, dass** der Vorsprung (14.1) und die Ausnehmung (8.1) einen annähernd halbkreisförmigen Längsschnitt aufweisen.

3. Schlauchanschluss nach Anspruch 1, **dadurch gekennzeichnet, dass** der Vorsprung (14.1) und die Ausnehmung (8.1) einen trapezförmigen - insbesondere gleichschenklig trapezförmigen - Längsschnitt aufweisen.

4. Schlauchanschluss nach einem der Ansprüche 1 bis 3, **dadurch gekennzeichnet, dass** der axiale Vorsprung (14.1) und die Ausnehmung (8.1) ungefähr im selben radialen Abstand (R) zur Schlauchachse (A) angeordnet sind, wie der Stützring (12).

5. Schlauchanschluss nach einem der Ansprüche 1 bis 4, **dadurch gekennzeichnet, dass** der Schlauch (2) als Wellschlauch ausgebildet und in den Wellentälern von Stützringen (22) umfasst ist.

6. Schlauchanschluss nach einem der Ansprüche 1 bis 5, **dadurch gekennzeichnet, dass** der Innenradius (R) des Stützringes (12) in der flanschartigen Verdickung (4) etwa gleich der Summe aus dem Innenradius (r) der Verdickung (4) und der Wandstärke (d) des Schlauches (2) ist.

7. Schlauchanschluss nach einem der Ansprüche 1 bis 6, **dadurch gekennzeichnet, dass** die Stützringe (12) und (22) dieselben Abmessungen aufweisen.

8. Schlauchanschluss nach einem der Ansprüche 1 bis 7, **dadurch gekennzeichnet, dass** der freie Innenradius der V-Schelle (10), bis auf den sich deren Schenkel (10.1, 10.2) der Schlauchachse (A) nähern, annähernd gleich dem Innenradius (R) des Stützringes (12) ist.

9. Schlauchanschluss nach einem der Ansprüche 1 bis 8, **dadurch gekennzeichnet, dass** der Schlauch (2) eine Innenseele (24) in Form einer bezüglich der in der Ladeluft enthaltenen Kohlenwasserstoffe unempfindlichen und weitgehend undurchlässigen Sperrschicht aufweist und dass diese Sperrschicht sich um die flanschartige Verdickung (4) des Schlauchendes herum erstreckt und deren Stirn-, Aussen- und Rückfläche überdeckt.

10. Schlauchanschluss nach Anspruch 9, **dadurch gekennzeichnet, dass** die Innenseele (24) des Schlauches aus Fluor-Elastomeren (FPM) gebildet ist.

11. Schlauchanschluss nach einem der Ansprüche 1 bis 10, **dadurch gekennzeichnet, dass** die die Schlauchwandung bildenden hitzebeständigen Elastomere (18) Silikon-Elastomere (VMQ) sind.

## Claims

1. Hose connection for supercharger air intercoolers, having a hose connecting piece (6), which is connected to the supercharger air intercooler and has a radial end face (8) and a conical rear face, and said hose connection having a hose (2), which has a wall formed from heat-resistant elastomers (18) and reinforcing members (20), and having a V-shaped clamp (10), by means of which clamp a free end of the hose (2) is connectable to the hose connecting piece (6), the free end of the hose (2) being shaped as a radial flange-like thickened portion (4), the axial end face (14) of which thickened portion has a radial configuration, and the axial rear face (9) of which thickened portion has a conical configuration, and in which thickened portion a supporting ring (12) is embedded, said ring having a bent-over portion (16) of the reinforcing members (20) looped therearound, **characterised in that** an annularly surrounding axial projection member (14.1) is provided on the end face (14) of the flange-like thickened portion (4), which projection member co-operates with a surrounding axial recess (8.1) of an identical longitudinal section, which recess is situated axially opposite said projection member and is provided in the end face (8) of the hose connecting piece (6), said co-operation being achieved by the projection member engaging in said recess in a form-fitting manner.

2. Hose connection according to claim 1, **characterised in that** the projection member (14.1) and the recess (8.1) have an approximately semi-circular longitudinal section.

3. Hose connection according to claim 1, **characterised in that** the projection member (14.1) and the recess (8.1) have a trapezoidal longitudinal section - more especially an equal-sided-trapezoidal longitudinal section.

4. Hose connection according to one of claims 1 to 3, **characterised in that** the axial projection member (14.1) and the recess (8.1) are disposed at roughly the same radial spacing (R) from the hose axis (A) as the supporting ring (12).

5. Hose connection according to one of claims 1 to 4, **characterised in that** the hose (2) is an undulatory hose and is surrounded by supporting rings (22) in the troughs of the undulations.

6. Hose connection according to one of claims 1 to 5, **characterised in that** the inner radius (R) of the supporting ring (12) in the flange-like thickened portion (4) is substantially identical to the sum of the inner radius (r) of the thickened portion (4) and the wall thickness (d) of the hose (2).

7. Hose connection according to one of claims 1 to 6, **characterised in that** the supporting rings (12) and (22) have the same dimensions.

8. Hose connection according to one of claims 1 to 7, **characterised in that** the free inner radius of the V-shaped clamp (10) is approximately identical to the inner radius (R) of the supporting ring (12), apart from where its portions (10.1, 10.2) come close to the hose axis (A).

9. Hose connection according to one of claims 1 to 8, **characterised in that** the hose (2) has an inner core (24) in the form of a barrier layer, which is insensitive to the hydrocarbons contained in the supercharger air and is largely impermeable, and **in that** this barrier layer extends around the flange-like thickened portion (4) of the hose end and covers the end face, the outer face and the rear face of said thickened portion.

10. Hose connection according to claim 9, **characterised in that** the inner core (24) of the hose is formed from fluorine elastomers (FPM).

11. Hose connection according to one of claims 1 to 10, **characterised in that** the heat-resistant elastomers (18), which form the hose wall, are silicone elastomers (VMQ).

## Revendications

1. Raccord de tuyau pour appareil de refroidissement intermédiaire comprenant une tubulure de tuyau (6) solidaire de l'appareil de refroidissement intermédiaire, qui présente une surface avant radiale (8) et une surface arrière conique, un tuyau (2) présentant une paroi formée d'élastomères (18) résistants aux hautes températures et des insertions de renforcement (20), et un collier en V (10) au moyen duquel une extrémité libre du tuyau (2) peut être assemblée à la tubulure de tuyau (6), l'extrémité libre du tuyau (2) étant munie d'un renflement radial (4) en forme de bride, dont la surface frontale axiale (14) est de configuration radiale et la surface arrière axiale de configuration conique, et dans lequel est noyée une bague de soutien (12) enveloppée par un retournement (16) des insertions de renforcement (20), **caractérisé en ce que**, sur la surface frontale (14) du renflement (4) en forme de bride, est formée une saillie axiale (14.1) circonférentielle en anneau qui coopère avec un évidement axial circonférentiel (8.1) de même section longitudinale, opposé face à face dans la direction axiale, formé dans la surface frontale (8) de la tubulure de tuyau (6), en s'engageant dans cet évidement par complémentarité de forme.

2. Raccord de tuyau selon la revendication 1, **caractérisé en ce que** la saillie (14.1) et l'évidement (8.1) présentent une section longitudinale à peu près semi-circulaire.

3. Raccord de tuyau selon la revendication 1, **caractérisé en ce que** la saillie (14.1) et l'évidement (8.1) présentent une section longitudinale trapézoïdale, en particulier en forme de trapèze isocèle.

4. Raccord de tuyau selon une des revendications 1 à 3, **caractérisé en ce que** la saillie axiale (14.1) et l'évidement (8.1) sont disposés à peu près à la même distance radiale (R) de l'axe (A) du tuyau que l'anneau de soutien (12).

5. Raccord de tuyau selon une des revendications 1 à 4, **caractérisé en ce que** le tuyau (2) est constitué par un tuyau ondulé et est entouré par des bagues de soutien (22) dans les creux d'ondes.

6. Raccord de tuyau selon une des revendications 1 à 5, **caractérisé en ce que** le rayon intérieur (R) de la bague de soutien (12) logée dans le renflement (4) en forme de bride est à peu près égal à la somme du rayon intérieur (R) du renflement (4) et de l'épaisseur de paroi (d) du tuyau (2).

7. Raccord de tuyau selon une des revendications 1 à 6, **caractérisé en ce que** les bagues de soutien (12) et (22) ont les mêmes dimensions.

8. Raccord de tuyau selon une des revendications 1 à 7, **caractérisé en ce que** le rayon intérieur libre du collier en V (10), jusqu'où les branches (10.1), (10.2) se rapprochent de l'axe du tuyau, est à peu près égal au rayon intérieur (R) de la bague de soutien (12).

9. Raccord de tuyau selon une des revendications 1 à 8, **caractérisé en ce que** le tuyau (2) possède une âme intérieure (24) formée d'une couche d'arrêt qui est insensible aux hydrocarbures contenus dans l'air de charge et imperméable dans une large mesure, et **en ce que** cette couche d'arrêt s'étend autour du renflement en forme de bride (4) de l'extrémité du tuyau et recouvre les surfaces frontale, extérieure et arrière de ce renflement.

10. Raccord de tuyau selon la revendication 9, **caractérisé en ce que** l'âme intérieure (24) du tuyau est faite de fluoroélastomères (FPM).

11. Raccord de tuyau selon une des revendications 1 à 10, **caractérisé en ce que** les élastomères (18), résistants aux hautes températures qui forment la paroi du tuyau sont des élastomères de silicone (VMQ).
